# EUROPÄISCHE PATENTSCHRIFT

(11) **EP 2 268 939 B1**
(45) Veröffentlichungstag und Bekanntmachung des Hinweises auf die Patenterteilung: **25.04.2012**
(21) Anmeldenummer: 09714668.2
(22) Anmeldetag: 09.02.2009
(51) Int. Cl.: F16H 1/28, F16H 55/18, F16H 57/08

(54) **SPIELFREIES PLANETENGETRIEBE MIT GETEILTEN PLANETENRÄDERN, DIE DURCH PARALLEL ZUR PLANETENROTATIONSACHSE ANGEORDNETE FEDERSTÄBE VORGESPANNT SIND**
PLAY-FREE PLANETARY GEAR SET WITH SPLIT PLANET GEARS WHICH ARE PRELOADED BY MEANS OF SPRING BARS ARRANGED PARALLEL TO THE PLANET ROTATIONAL AXIS
TRAIN ÉPICYCLOÏDAL SANS JEU DOTÉ DE SATELLITES DIVISÉS QUI SONT PRÉCHARGÉS PAR DES BARRES DE TORSION DISPOSÉES PARALLÈLEMENT À L'AXE DE ROTATION DES SATELLITES

(30) Priorität: 26.02.2008 DE 102008011147
(43) Veröffentlichungstag der Anmeldung: 05.01.2011
(73) Patentinhaber: Maxon Motor AG, 6072 Sachseln (CH)
(72) Erfinder: SCHÄFER, Rolf, 79356 Eichstetten (DE)
(74) Vertreter: Grünecker, Kinkeldey, Stockmair & Schwanhäusser
(86) Internationale Anmeldenummer: PCT/EP2009/000890
(87) Internationale Veröffentlichungsnummer: WO 2009/106222

(56) Entgegenhaltungen:
- EP-A- 1 034 923
- WO-A-02/09998
- US-A1- 2003 073 537

## Beschreibung

Die Erfindung betrifft ein spielfreies Planetengetriebe mit einem Sonnenrad, mit einem Hohlrad und mit zumindest einem mit diesen in Eingriff befindlichen Planetenrad, das um eine Planetenrotationsachse rotierbar auf einem Planetenträger angebracht ist, wobei das Zähne aufweisende Planetenrad eine Teilungsebene aufweist, die senkrecht zu der Planetenrotationsachse ausgerichtet ist, mittels der das Planetenrad in ein erstes Teilplanetenrad und ein zweites Teilplanetenrad aufgeteilt ist, wobei das erste Teilplanetenrad durch einen im Wesentlichen parallel zur Planetenrotationsachse in den beiden Teilplanetenrädern angeordneten Federstab relativ zum zweiten Teilplanetenrad vorgespannt ist, wobei der zumindest eine Federstab in einer ersten Ausnehmung des ersten Teilplanetenrades und in einer zweiten Ausnehmung des zweiten Teilplanetenrades angeordnet ist.

Aus dem Stand der Technik sind unterschiedliche spielfreie Planetengetriebe, etwa aus der gattungs gemäßen US 2003/0073537 A1 und der DE 197 57 433 A1, bekannt. Naheliegender Stand der Technik ist auch in der EP 1 034 923 A1 sowie der WO 02/09998 A1 offenbart.

Die US 2003/0073537 A1 offenbart vier unterschiedliche Ausführungsformen eines spielfreien Getriebes. Dabei weist ein Planetengetriebe ein zweigeteiltes Hohlrad mit unterschiedlichen Durchmessern auf. Wie bei Planetengetrieben üblich, kämmen mit Zähnen besetzte Planetenräder mit einem Sonnenrad einerseits und mit dem Hohlrad andererseits. Im Fall dieser US-Patentanmeldung kämmen zwei Teile der jeweiligen Planetenräder mit den zwei Teilen des Hohlrades. Die Planetenräder sind in zwei Teilplanetenräder aufgeteilt, wobei ein Teilplanetenrad einen kleineren Durchmesser als das andere Teilplanetenrad aufweist.

Die Teilplanetenräder mit dem kleineren Durchmesser kämmen mit dem Hohlrad mit entsprechend kleinerem Durchmesser als das andere Teilhohlrad. Das größere Teilhohlrad ist kämmend mit den Teilplanetenrädern in Eingriff, die einen größeren Durchmesser als die anderen Teilplanetenräder aufweisen. Das eine Teilhohlrad ist dabei stationär angeordnet, wohingegen das andere Teilhohlrad frei rotierbar ist. Die jeweiligen zwei Teilplanetenräder, die ein gesamtes Planetenrad bilden, sind gegeneinander um ein und dieselbe Planetenrotationsachse relativ zueinander frei rotierbar. Daher können die Zähne des einen Teilplanetenrades relativ zu den Zähnen des anderen Teilplanetenrades leicht verdreht sein, so dass die jeweiligen Zähne der Teilplanetenräder, welche mit den jeweiligen Hohlrädem in Eingriff stehen, spielfrei an den jeweiligen Flanken der Zähne der Teilhohlräder anliegen.

In den vier offenbarten Ausführungsformen werden unterschiedliche Arten zur Erreichung der Vorspannung, also zum Erreichen der Verdrehung des einen Teilplanetenrades zu dem dazugehörigen anderen Teilplanetenrad, offenbart.

Als erste Ausführungsform wird beschrieben, dass ein Bolzen durch eine Öffnung des ersten Teilplanetenrades bis in das zweite Teilplanetenrad ragt. Der Bolzen ist dabei im zweiten Teilplanetenrad fest verankert. Das obere Ende des Bolzens ist mit einer Feder in Kontakt, wobei die Feder einen Teil-Ringquerschnitt aufweist und mit einem zweiten Bolzen verbunden ist, der fest im ersten Teilplanetenrad verankert ist. Mittels dieser Bolzen-Federkombination ist eine Vorspannung zwischen den Teilplanetenrädern erzielbar.

In einem zweiten Ausführungsbeispiel ist die Vorspannung mittels einer normalen auf Druck belastbaren Schraubenfeder erreichbar, die in einem Schlitz des ersten Teilplanetenrades angeordnet ist und im Anschlag mit dem ersten Teilplanetenrad und einem Bolzen befindlich ist, wobei der Bolzen in dem zweiten Teilplanetenrad fest verankert ist.

In einem dritten Ausführungsbeispiel wird eine konzentrisch angeordnete, auf Torsion belastbare Welle offenbart. Wird das erste Teilplanetenrad so auf der Welle befestigt, dass die Zähne der beiden Teilplanetenräder nicht fluchten, so wirkt eine Torsionskraft auf die beiden Teilplanetenräder, wenn die Zähne der beiden Teilplanetenräder fluchtend zueinander angeordnet werden.

Alternativ dazu ist in einem vierten Ausführungsbeispiel der US 2003/0073537 A1 ein radial angeordnetes Biegeelement zur Aufbringung der Vorspannung zwischen den beiden Teilplanetenrädern mit einer Welle und einem exzentrisch parallel zur Rotationsachse der beiden Teilplanetenräder angeordneten Bolzen in Kontakt.

Auch sind aus dem Stand der Technik unterschiedliche Dokumente bekannt, die ein Vorspannen von in normalen Getrieben verwendeten Zahnrädern offenbaren. So offenbart die EP 1 034 923 A1 Federelemente zum Vermeiden von Zahnradspiel in Getrieben. Auch die US 2,845,809 behandelt das Vorspannen von zwei Zahnrädern zueinander zur Spielverhinderung. Auch die JP 02113154, die US 3,138,035, sowie die US 5,492,029 offenbaren Lösungen zum Vermeiden von Spiel zwischen Zahnrädern. Benachbarter Stand der Technik ist auch aus der DE 7400276 U, der US 2004/0154422 A1, der WO 02/09998 A1 und der FR 2805327 A1 bekannt.

Die für normale Zahnräder bekannten Lösungen haben den Nachteil, dass viel Bauraum für derartige Getriebe benötigt wird. Gerade für den Antrieb kleiner Elektrogeräte ist es bedeutsam, nur einen kleinen Bauraum zu benötigen.

Bei Planetengetrieben ist es sehr aufwendig, eine Spielfreiheit zu erreichen. So weisen die vier Lösungsvarianten der US 2003/0073537 A1 zahlreiche Nachteile auf. Es ist z.B. notwendig, dass eines der Teilhohlräder stationär angeordnet ist und die Teilplanetenräder unterschiedliche Durchmesser aufweisen. Auch das Vorspannen der Teilplanetenräder zueinander wird eher umständlich erreicht: Die Variante des Vorspannens mittels einer weichen Torsionsfeder mit teilringförmigern Querschnitt erfordert, dass die jeweiligen Bolzen in Richtung der Planetenrotationsachse überstehen, damit die Feder nicht herunterspringt und ein Ausfall des Planetengetriebes nicht die Folge ist. Dadurch wird zusätzlicher Bauraum benötigt.

Bei Verwendung einer orthogonal zur Planetenrotationsachse angeordneten schraubenförmigen Kompressionsfeder ist eine zusätzliche Sicherung der Feder gegen Herausfallen aus der Ausnehmung des ersten Teilplanetenrades notwendig, was ebenfalls den Bauraum erhöht.

Auch die dritte Variante, welche eine torsionsbelastbare Welle zur Vorspannung benutzt, erfordert aufwendige Befestigungslösungen und gestaltet die Montage aufgrund der kleinen Abmessungen in Planetengetrieben, insbesondere der kleinen Freiheitsgrade, besonders aufwändig. Auch die Variante der Verwendung eines radial angeordneten Vorspannelementes benötigt erheblichen Bauraum.

Die vorliegende Erfindung hat zur Aufgabe, nur sehr kleinen Bauraum zu benötigen, wobei der Betrieb des Planetengetriebes während einer langen Anwendungszeit wartungsfrei funktionieren soll. Eine kostengünstige Bereitstellung einer Spielfreifieit des Planetengetriebes ist ferner beabsichtigt.

Die Aufgabe wird durch die Erfindung gattungsgemäß durch die Merkmale des Anspruchs 1 gelöst.

Durch ein exzentrisches Anordnen zumindest eines Federstabes können größere Kräfte auf die Teilplanetenräder übertragen werden, ohne den Bauraum zu vergrößern. Dadurch ist es möglich, dass das Planetengetriebe während einer langen Anwendungszeit wartungsfrei, selbst bei Lastwechseln und Richtungsänderungen arbeitet. Die Haltbarkeit solcher Planetengetriebe wird erhöht. Auch wird die Anwendbarkeit für enge und kleinste Anwendungen verbessert. Insbesondere bei elektronischen Miniaturgeräten sind diese Planetengetriebe vorteilhaft einsetzbar. Wenn die Federstäbe auf Biegung belastet sind, ist ein definiertes, gut vorhersagbares und einstellbares Verformungsverhalten, die auch durch eine bekannte Biegelinie darstellbar ist, nutzbar, wodurch die zu erzielende Vorspannung zwischen den beiden Teilplanetenrädern besonders exakt einstellbar ist. Solche Federstäbe sind auch kostengünstig herstellbar oder käuflich erwerbbar, was die Kosten erfindungsgemäßer Planetengetriebe verringert. Ferner stellen sich solche Planetengetriebe im Betrieb nach, insbesondere bei auftretender Abnutzung. Ein radiales Spiel am Sonnenrad und Hohlrad wird kompensiert. Auch ist die Montage einfach durchführbar.

Wenn die Federstäbe in ersten Ausnehmungen des ersten Teilplanetenrades und zweiten Ausnehmungen des zweiten Teilplanetenrades angeordnet sind, wobei sich die ersten und zweiten Ausnehmungen bis in den Bereich der Teilungsebene erstrecken, so ist es besonders einfach die Federstäbe in den beiden Teilplanetenrädern zu verankern und die Vorspannung zu erreichen.

Um ein Abscheren der Federstäbe zu vermeiden, ist es von Vorteil, wenn die ersten Ausnehmungen und die zweiten Ausnehmungen als sich zur Teilungsebene erweiternde Löcher ausgestaltet sind.

Es ist von Vorteil, wenn mehrere Federstäbe um die Planetenrotationsachse herum angeordnet sind.

Auch ist es ferner bevorzugt, wenn das Loch im Bereich der Teilungsebene in Verdrehrichtung der Teilplanetenräder zueinander nieren- oder fächerförmig erweitert ist. Insbesondere die Ausgestaltung als Sackloch vermeidet, dass die Federstäbe aus den Teilplanetenrädern auf der jeweiligen der Teilungsebene abgewandten Seite austreten, und Beschädigungen an Elementen des Planetengetriebes, wie etwa dem Planetenträger hervorrufen.

In den Unteransprüchen werden vorteilhafte Ausführungsformen beansprucht und nachfolgend näher beschrieben.

Die Kosten des Planetengetriebes und die Ausfallwahrscheinlichkeit werden weiter verringert, wenn in einem vorteilhaften Ausführungsbeispiel die Federstäbe aus metallischem Werkstoff, vorzugsweise Federstahl bestehen. Solche Federstahlstäbe sind robust und kostengünstig. Auch ist deren Lagerhaltung einfach zu bewerkstelligen.

Die Verwendung ovaler Achsen hat dabei den Vorteil, dass ein radiales Spiel besonders effizient ausgleichbar ist.

Ein Abstützen von Guss- und/oder Sinterkemen bei gleichzeitigem Vermeiden des Herausfallens der Federstäbe aus den Teilplanetenrädern wird erreicht, wenn zumindest eine der ersten oder zweiten Ausnehmungen als Durchgangsloch ausgebildet ist und auf der teilungsebenenfemen Seite einen Durchmesser aufweist, der kleiner als der Durchmesser der Federstäbe bemessen ist.

Wenn das erste Teilplanetenrad zu dem zweiten Teilplanetenrad durch drei äquidistant zueinander angeordnete Federstäbe vorgespannt ist, lassen sich zwischen den Teilplanetenrädern wirkende exzentrische Kräfte wirkungsvoll vermeiden. Ferner können die Federstäbe dünner ausgestaltet werden, und es lässt sich trotzdem die notwendige Vorspannkraft erreichen. Folglich wird das Planetengetriebe leichter, wartungsfreier und auf lange Sicht ausfallsicherer.

Um die Verankerung der Federstäbe in den beiden Teilplanetenrädern wirkungsvoll sicherzustellen, und um eine adäquate Kraftübertragung zu gewährleisten, ist es in einem weiteren Ausführungsbeispiel von Vorteil, wenn die Federstäbe sich durch 3/4 bis 7/8, vorzugsweise 13/16 der in Richtung der Planetenrotationsachse gemessenen Dicke des ersten und/oder zweiten Teilplanetenrades erstrecken.

Um die Montage besonders einfach zu gestalten, ist es in einem weiteren Ausführungsbeispiel von Vorteil, wenn die ersten Ausnehmungen zu den zweiten Ausnehmungen bei fluchtender Anordnung der Zähne des ersten Teilplanetenrades zu den Zähnen des zweiten Teilplanetenrades versetzt sind.

Wenn eine erste Ausnehmung zu einer zweiten Ausnehmung tangential versetzt ist, vorzugsweise spiegelsymmetrisch zu einer Symmetrieachse durch den jeweiligen Zahn und die Planetenrotationsachse, ist es nur notwendig, ein einzelnes Teilplanetenrad zu fertigen, dieses einmal umzudrehen, so dass sich die Ausnehmungen gegenüberliegen, die Federstäbe einzusetzen, wodurch automatisch schon ein Versatz der einzelnen Zähne des einen Teilplanetenrades zum anderen Teilplanetenrad erreicht ist. Fehlmontage wird dadurch effizient verhindert.

Die Montage wird auch weiter vereinfacht, wenn die Federstäbe in einem weiteren Ausführungsbeispiel in einem trennungsebenenfernen Abschnitt der ersten und/oder zweiten Ausnehmungen in einem engen Schiebesitz gehalten sind.

Die Erfindung wird nachfolgend auch mit Hilfe einer Zeichnung näher erläutert. Es zeigen:
- Fig. 1: einen Querschnitt durch ein erfindungsgemäßes Planetengetriebe,
- Fig. 2: eine perspektivische Detaildarstellung eines Planetenträgers mit drei darauf montierten jeweils aus zwei Teilplanetenrädern gebildeten Planetenrädern, wobei in den Teilplanetenrädern auf Biegung belastete Federstäbe in trompetenförmigen Bohrungen eingesetzt sind,
- Fig. 3: eine perspektivische Darstellung zweier Teilplanetenräder mit eingesetzten Federstäben und
- Fig. 4: eine perspektivische Darstellung fächerförmig sich in Drehrichtung erweiternder Ausnehmungen.

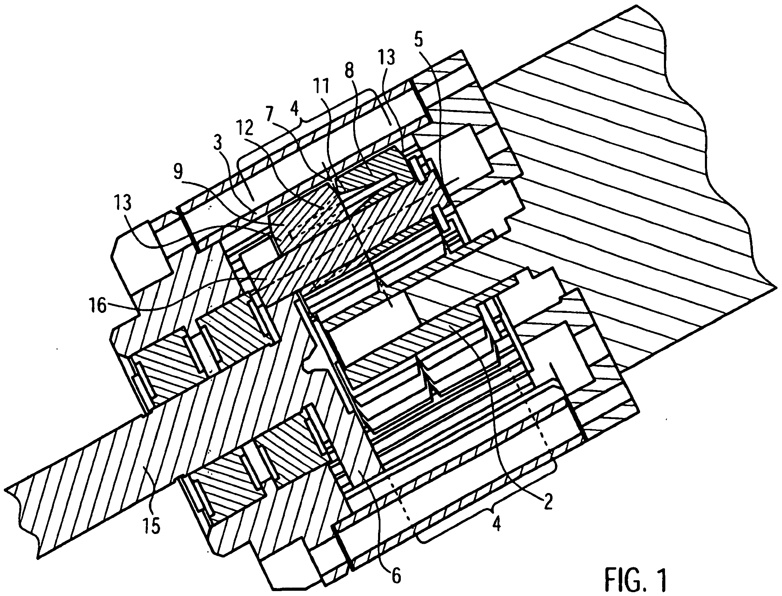

Fig. 1 zeigt ein erfindungsgemäßes Planetengetriebe 1. Dabei weist das Planetengetriebe 1 ein Sonnenrad 2, ein Hohlrad 3 und drei Planetenräder 4 auf. Da die Planetenräder 4 um die Rotationsachse des Sonnenrades 2 um 120° versetzt sind, sind in der Darstellung in Fig. 1 nur zwei der drei Planetenräder 4 dargestellt. Es ist alternativ zur Verwendung von drei Planetenrädern 4 auch möglich, eine gerade Anzahl von Planetenrädern 4, insbesondere vier Planetenräder 4, zu verwenden. Dies hat den Vorteil, dass exzentrisch wirkende Kräfte verhindert Werden:

Die einzelnen Planetenräder 4 weisen jeweils eine Planetenrotationsachse 5 auf. Eine Planetenrotationsachse 5 ist in Fig. 1 dargestellt.

Die Planetenräder 4 sind rotierbar mit einem Planetenträger 6 verbunden. Die Planetenräder 4 sind entlang einer Teilungsebene 7 jeweils in ein erstes Teilplanetenrad 8 und ein zweites Teilplanetenrad 9 geteilt. Das erste Teilplanetenrad 8 ist relativ zu dem zweiten Teilplanetenrad 9 um dieselbe Planetenrotationsachse 5 rotierbar angeordnet. Dabei sind die beiden Teilplanetenräder 8 und 9 auf einer Achse angeordnet. Die Achse ist im Planetenträger 6 befestigt und weist an einem dem Planetenträger 6 gegenüberliegenden Ende eine Sicherungseinrichtung, insbesondere einen Sprengring auf. Der Sprengring ist so angeordnet, dass er nicht in Anlage mit dem ersten Teilplanetenrad 8 befindlich ist, um nicht mit diesem zusammen zu rotieren.

In dem ersten Teilplanetenrad 8 und dem zweiten Teilplanetenrad 9 sind drei Federstäbe 10 so angeordnet, dass die Federstäbe 10 mit beiden Teilplanetenrädern 8 und 9 in Verbindung stehen. Die Federstäbe 10 sind dabei in eine erste Ausnehmung 11 in dem ersten Teilplanetenrad 8 und in eine zweite Ausnehmung 12 in dem zweiten Teilplanetenrad 9 eingesetzt. Die erste Ausnehmung 11 und die zweite Ausnehmung 12 sind als Sacklöcher ausgebildet. Dabei erweitern sich die Sacklöcher, beabstandet von deren Grund, bis zu der auf Seiten der Teilungsebene 7 befindlichen Oberfläche konisch. Die Sacklöcher sind also abschnittsweise konisch ausgestaltet. In diesem konischen Bereich sind die Federstäbe 10 nicht in Kontakt mit der Wandung der ersten Ausnehmung 11 und der zweiten Ausnehmung 12. Lediglich im Grundbereich der ersten Ausnehmung 11 und der zweiten Ausnehmung 12 sind die Federstäbe 10 in Kontakt mit den Wänden der ersten Ausnehmung 11 oder der zweiten Ausnehmung 12, also mit dem ersten Teilplanetenrad 8 oder dem zweiten Teilplanetenrad 9. In diesem Bereich sind die Sacklöcher mit einem Durchmesser derart ausgestaltet, dass sie einen engen Schiebesitz für die Federstäbe 10 zur Verfügung stellen.

Die Federstäbe 10 sind dabei als runde Federstahlstäbe ausgebildet. Die Federstahlstäbe werden im Gebrauch des Planetengetriebes 1 auf Biegung beansprucht. Die konische Erweiterung der ersten und zweiten Ausnehmung 11 und 12 ist von Nöten, um ein Abscheren der Federstäbe 10 bei Verdrehung des ersten Teilplanetenrades zum zweiten Teilplanetenrad, zu vermeiden.

Die Federstäbe 10 sind relativ zur Planetenrotationsachse 5 äquidistant zueinander angeordnet. Auch sind die Federstäbe 10 äquidistant zueinander angeordnet. Ferner ist von der Planetenrotationsachse 5, ausgemessen zwischen den Federstäben 10 jeweils ein 120°-Winkel anliegend. Die beiden Teilplanetenräder 8 und 9 weisen jeweils Zähne 13 auf. Die Zähne 13 kämmen mit Zähnen des Hohlrades 3 und Zähnen des Sonnenrades 2.

Das Sonnenrad 2 ist mit einer Antriebswelle eines Elektromotors verbunden. Der Planetenträger 6 ist mit einer Abtriebswelle 15 verbunden, oder, wie im vorliegenden Fall, ist so ausgebildet, dass die Abtriebswelle 15 einen integralen Bestandteil bildet. Das Hohlrad 3 ist mit dem Gehäuse des Planetengetriebes 1 fest verbunden.

Die zwei Teilplanetenräder 8 und 9 sind so ausgebildet, dass deren Zähne 13 nicht miteinander fluchten, wenn die erste Ausnehmung 11 und die zweite Ausnehmung 12 miteinander fluchten. Sind die Zähne 13 des ersten Teilplanetenrades 8 und des zweiten Teilplanetenrades 9 miteinander fluchtend, so fluchten nicht die erste Ausnehmung 11 und die zweite Ausnehmung 12. Die Federstäbe 10 sind dann aufgrund deren Verbiegung vorgespannt und drängen das erste Teilplanetenrad 8 und das zweite Teilplanetenrad 9 derart um die Planetenrotationsachse 5 herum, dass die Zähne 13 der beiden Teilplanetenräder 8 und 9 aus der Fluchtung gelangen. Dies hat zur Folge, dass eine Flanke eines Zahnes 13 des ersten Teilplanetenrades 8 in Anlage ist mit einer ihr gegenüber liegenden Flanke des Hohlrades 3 und/oder des Sonnenrades 2.

Die zu dieser Flanke auf der anderen Seite einer Symmetrieachse durch die Zahnspitze und die Planetenrotationsachse 5 befindliche Flanke des zweiten Teilplanetenrades 9, ist ebenfalls in Anlage mit einer Flanke eines Zahnes des Hohlrades 3 und/oder des Sonnenrades 2.

Dabei ist ein spielfreier Eingriff des Planetenrades 4 in das Sonnenrad 2 und/oder das Hohlrad 3 die Folge. Hierfür sind die Freiheiten bezüglich der Abmessungen der Zähne des Sonnenrades 2, des Hohlrades 3, des ersten Teilplanetenrades 8 und des zweiten Teilplanetenrades 9 entsprechend zu wählen.

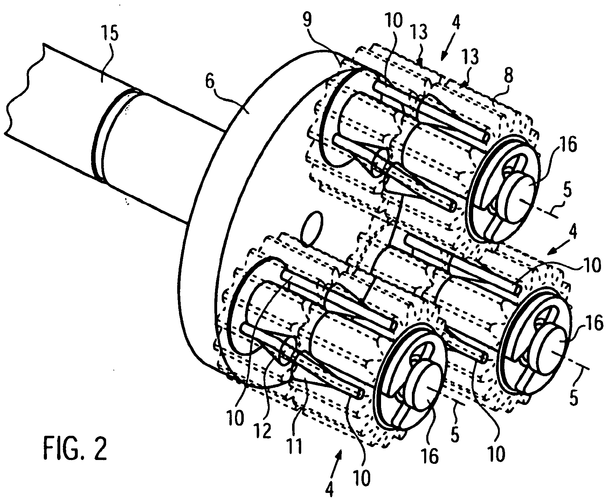

In Fig. 2 ist eine Detaildarstellung, in perspektivischer Ansicht, des Planetenträgers 6 und der drei Planetenräder 4. Die in Fig. 2 gut erkennbare Abtriebswelle ist mit dem Bezugszeichen 15 versehen. Die Wellen, auf denen die Planetenräder 4 rotierbar gelagert sind, sind mit dem Bezugszeichen 16 versehen. Aus Fig. 2 ist gut erkennbar, dass die Zähne 13 der beiden Teilplanetenräder 8 und 9 dann miteinander fluchten, wenn die Federstäbe 10 verbogen sind.

Die trompetenförmig ausgebildeten Ausnehmungen 11 und 12, in denen die Federstäbe 10 angeordnet sind, sind um die Planetenrotationsachse 5 angeordnet, wie auch die Federstäbe 10. Es ist in einer Variante möglich, durch die gezielte Wahl der Anzahl an Federstäben die gewünschte Federkraft einzustellen. Insbesondere bei Anwendung in mehrstufigen Getrieben, und hier besonders der letzten Stufe, also der Ausgangsstufe, bietet sich dies an.

Die Aufteilung von sechs Ausnehmungen in zwei im Wesentlichen mit gegenüberliegenden Quadranten eines Teilplanetenrades 8 und 9 erleichtert die genaue Einstellung des Getriebes dabei.

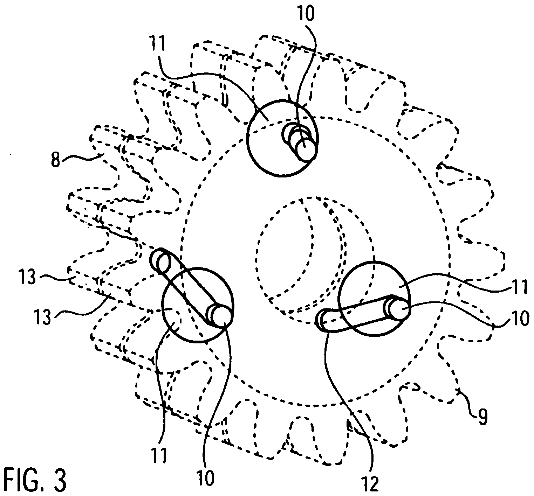

Die Fig. 3 zeigt in einer weiteren Detailansicht die zwei Teilplanetenräder 8 und 9 zusammen mit den verbogenen Federstäben 10 in eingesetztem Zustand in die jeweiligen ersten und zweiten Ausnehmungen 11 und 12. Die Verbiegung der Federstäbe 10 findet bei Fluchtung der Zähne 13 des ersten Teilplanetenrades 8 mit den jeweiligen Zähnen des zweiten Teilplanetenrades 9 statt.

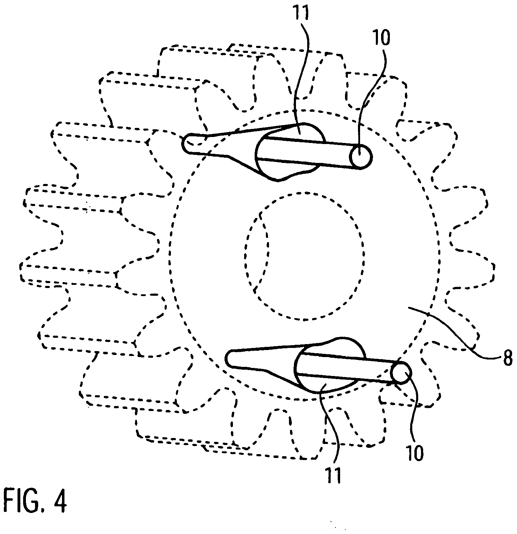

In Fig. 4 ist das erste Teilplanetenrad 8 dargestellt. Die Ausnehmungen 11 sind allerdings nicht mehr trompetenförmig, sondern fächerförmig, sich von der Teilungsebene weg verengend, ausgebildet. Auch sind sie in Drehrichtung gebogen ausgeführt. Die zwei Ausnehmungen 11 weisen im teilungsebenenfernen Bereich einen kreisrunden oder ovalen Endbereich auf, der einen engen Schiebesitz in Bezug auf den jeweiligen eingesetzten Federstab, welcher einen runden Querschnitt aufweist, darstellt.

## Patentansprüche

1. Spielfreies Planetengetriebe (1) mit einem Sonnenrad (2), mit einem Hohlrad (3) und mit zumindest einem mit diesen in Eingriff befindlichen Planetenrad (4), das um eine Planetenrotationsachse (5) rotierbar auf einem Planetenträger (6) angebracht ist, wobei das Zähne (13) aufweisende Planetenrad (4) eine Teilungsebene (7) aufweist, die senkrecht zu der Planetenrotationsachse (5) ausgerichtet ist, mittels der das Planetenrad (4) in ein erstes Teilplanetenrad (8) und ein zweites davon separates Teilplanetenrad (9) aufgeteilt ist, wobei das erste Teilplanetenrad (8) durch zumindest einen im Wesentlichen parallel zur Planetenrotationsachse (5) in den beiden Teilplanetenrädern (8, 9) angeordneten Federstab (10) relativ zum zweiten Teilplanetenrad (9) vorgespannt ist, wobei der zumindest eine Federstab (10) in einer ersten Ausnehmung (11) des ersten Teilplanetenrades (8) und einer zweiten Ausnehmung (12) des zweiten Teilplanetenrades (9) angeordnet ist, **dadurch gekennzeichnet, dass** der zumindest eine auf Biegung belastete, in den beiden Teilplanetenrädern (8, 9) gelagerte Federstab (10) zur Planetenrotationsachse (5) beabstandet angeordnet und in den beiden Teilplanetenrädern (8, 9) verankert ist , wobei sich die erste und die zweite Ausnehmung (11, 12) bis in den Bereich der Teilungsebene (7) erstreckt, und wobei die erste Ausnehmung (11) und die zweite Ausnehmung (12) als sich zur Teilungsebene (7) erweiternde Löcher ausgestaltet sind.

2. Planetengetriebe (1) nach Anspruch 1, wobei mehrere Federstäbe (10) um die Planetenrotationsachse (5) herum angeordnet sind.

3. Planetengetriebe (1) nach Anspruch 1 oder 2, wobei zumindest ein Federstab (10) aus metallischem Werkstoff besteht.

4. Planetengetriebe (1) nach einem der vorhergehenden Ansprüche, wobei zumindest eine der ersten oder zweiten Ausnehmungen (11, 12) als Durchgangsloch ausgebildet ist und auf der teilungsebenenfemen Seite einen Durchmesser aufweist, der kleiner als der Durchmesser des/der Federstabes/Federstäbe (10) bemessen ist.

5. Planetengetriebe (1) nach einem der vorhergehenden Ansprüche, wobei das Loch im Bereich der Teilungsebene (7) in Verdrehrichtung der Teilplanetenräder (8, 9) zueinander nieren- oder fächerförmig erweitert ist und das Loch als Sackloch ausgestaltet ist.

6. Planetengetriebe (1) nach Anspruch 5, wobei die Sacklöcher konisch gestaltet sind.

7. Planetengetriebe (1) nach einem der Ansprüche 1 bis 6, wobei das erste Teilplanetenrad (8) zum zweiten Teilplanetenrad (9) durch drei äquidistant zueinander angeordnete Federstäbe (10) vorgespannt ist.

8. Planetengetriebe (1) nach einem der Ansprüche 1 bis 7, wobei die Federstäbe (10) sich durch 3/4 bis 7/8, insbesondere 13/16, der in Richtung der Planetenrotationsachse (5) gemessenen Dicke des ersten und/oder zweiten Teilplanetenrades (8, 9) erstrecken.

9. Planetengetriebe (1) nach einem der Ansprüche 1 bis 8, wobei die ersten Ausnehmungen (11) zu den zweiten Ausnehmungen (12) bei fluchtender Anordnung der Zähne (13) des ersten Teilplanetenrades (8) zu den Zähnen (13) des zweiten Teifplanetenrades (9) versetzt sind.

10. Planetengetriebe (1) nach Anspruch 9, wobei die erste Ausnehmung (11) zu der zweiten Ausnehmung (12) tangential versetzt ist, insbesondere spiegelsymmetrisch zu einer Symmetrieachse durch den jeweiligen Zahn und die Planetenrotationsachse (5).

11. Planetengetriebe (1) nach einem der Ansprüche 1 bis 10, wobei die Federstäbe (10) in einem trennungsebenenfernen Abschnitt der ersten und/oder zweiten Ausnehmung (11, 12) in einem engen Schiebesitz gehalten sind.

12. Planetengetriebe (1) nach einem der vorhergehenden Ansprüche, wobei die im unbelasteten Zustand geraden Federstäbe (10) einen gleichbleibend runden Querschnitt aufweisen.

## Claims

1. A backlash-free planetary gear (1) comprising a sun gear (2), an internal gear (3) and at least one planet gear (4), which is in mesh with said sun gear (2) an said internal gear (3) and which is arranged on a planet carrier (6) such that it is rotatable about a planetary axis of rotation (5), wherein the planet gear (4), which comprises teeth (13) has a plane of division (7) which is oriented perpendicular to the planetary axis of rotation (5), by means of which the planet gear (4) is divided into a first planet subgear (8) and a second planet subgear (9) that is separated from the first planet subgear (8), wherein the first planet subgear (8) is preloaded relative to the second planet subgear (9) by at least one spring bar (10) arranged in these two planet subgears (8, 9) substantially parallel to the planetary axis of rotation (5), wherein the at least one spring bar (10) is arranged in a first recess (11) of the first planet subgear (8) and a second recess (12) of the second planet subgear (9) **characterized in that** the at least one spring bar (10) which is supported in both planet subgears (8, 9) and subject to a bending load, is arranged spaced apart from the planetary axis of rotation (5) and is anchored in both planet subgears (8, 9), wherein the first and second recesses (11, 12) extend up to the area of the plane of division (7), and wherein the first recess (11) and the second recess (12) are implemented as holes widening towards the plane of division (7).

2. The planetary gear (1), according to claim 1, wherein a plurality of bars (10) are arranged around the planetary axis of rotation (5).

3. The planetary gear (1), according to claims 1 or 2, wherein at least one spring bar (10) is made of metallic material.

4. The planetary gear (1), according to one of the preceding claims, wherein at least one of the first or second recesses (11, 12) is implemented as a through-hole and has, on the side remote from the plane of division (7), a diameter which is dimensioned smaller than the diameter of the spring bar(s) (10).

5. The planetary gear (1), according to one of the preceding claims, wherein, in the direction in which the planetary subgears (8, 9) are rotatably displaced relative to one another, the hole widens in a kidney-shaped or fan-shaped manner in the area of the plane of division (7), and wherein the hole is implemented as a blind hole.

6. The planetary gear (1), according to claim 5, wherein the blind holes are conical shaped.

7. The planetary gear (1), according to one of claims 1 to 6, wherein the first planet subgear (8) is preloaded relative to the second planet subgear (9) by means of three spring bars (10) which are arranged such that they are equidistant to one another.

8. The planetary gear (1), according to one of claims 1 to 7, wherein the spring bars (10) extend through 3/4 to 7/8, in particular 13/16 of the thickness of the first and/or second planet subgears (8, 9), said thickness measured in the direction of the planetary axis of rotation (5).

9. The planetary gear (1), according to one of claims 1 to 8, wherein the first recesses (11) are displaced relative to the second recesses (12), when the teeth (13) of the first planet subgear (8) are in alignment with the teeth (13) of the second planet subgear (9).

10. The planetary gear (1), according to claim 9, wherein the first recess (11) is tangentially displaced relative to the second recess (12), in particular, mirrored symmetrically with respect to a symmetry axis through the respective tooth and the planetary axis of rotation (5).

11. The planetary gear (1), according to one of claims 1 to 10, wherein the spring bars (10) are held in a tight, sliding seat in a section of the first and/or second recess (11, 12), which is remote from the plane of division (7).

12. The planetary gear (1), according to one of the preceding claims, wherein the spring bars (10), which are straight when no load is applied to them, have a non-varying, round cross-section.

## Revendications

1. Train épicycloïdal sans jeu (1) avec un planétaire (2), une couronne (3) et au moins un satellite (4) qui est engrené avec ceux-ci et qui est monté sur un support de satellite (6) de manière à pouvoir tourner sur un axe de rotation de satellite (5), étant précisé que le satellite (4) qui présente des dents (13) présente un plan de séparation (7) qui est perpendiculaire à l'axe de rotation de satellite (5) et grâce auquel le satellite (4) est divisé en une première partie de satellite (8) et une seconde partie de satellite (9), séparée de la première, que la première partie de satellite (8) est précontrainte par rapport à la seconde partie de satellite (9) par au moins une tige à ressort (10) disposée essentiellement parallèlement à l'axe de rotation de satellite (5) dans les deux parties de satellite (8, 9), et que la ou les tiges à ressort (10) sont disposées dans un premier creux (11) de la première partie de satellite (8) et un second creux (12) de la seconde partie de satellite (9), **caractérisé en ce que** la ou les tiges à ressort (10) chargées en flexion et montées dans les deux parties de satellite (8, 9) sont espacées de l'axe de rotation de satellite (5) et sont ancrées dans les deux parties de satellite (8, 9), étant précisé que les premier et second creux (11, 12) s'étendent jusque dans la zone du plan de séparation (7) et que le premier creux (11) et le second creux (12) sont conçus comme des trous qui s'élargissent vers le plan de séparation (7).

2. Train épicycloïdal (1) selon la revendication 1, étant précisé que plusieurs tiges à ressort (10) sont disposées autour de l'axe de rotation de satellite (5).

3. Train épicycloïdal (1) selon la revendication 1 ou 2, étant précisé qu'au moins une tige à ressort (10) se compose d'un matériau métallique.

4. Train épicycloïdal (1) selon l'une des revendications précédentes, étant précisé que l'un au moins des premier ou second creux (11, 12) est conçu comme un trou traversant et présente sur son côté éloigné du plan de séparation un diamètre qui est plus petit que le diamètre de la/des tiges à ressort (10).

5. Train épicycloïdal (1) selon l'une des revendications précédentes, étant précisé que le trou, dans la zone du plan de séparation (7), est élargi en forme de haricot ou d'éventail dans le sens de rotation des parties de satellite (8, 9), et le trou est conçu comme un trou borgne.

6. Train épicycloïdal (1) selon la revendication 5, étant précisé que les trous borgnes ont une forme conique.

7. Train épicycloïdal (1) selon l'une des revendications 1 à 6, étant précisé que la première partie de satellite (8) est précontrainte par rapport à la seconde partie de satellite (9) par trois tiges à ressort (10) équidistantes les unes par rapport aux autres.

8. Train épicycloïdal (1) selon l'une des revendications 1 à 7, étant précisé que les tiges à ressort (10) s'étendent sur 3/4 à 7/8, en particulier 13/16 de l'épaisseur des première et/ou seconde parties de planétaire (8, 9) mesurée dans le sens de l'axe de rotation de satellite (5).

9. Train épicycloïdal (1) selon l'une des revendications 1 à 8, étant précisé que les premiers creux (11) sont décalés par rapport aux seconds creux (12), quand les dents (13) de la première partie de satellite (8) et les dents (13) de la seconde partie de satellite (9) sont alignées.

10. Train épicycloïdal (1) selon la revendication 9, étant précisé que le premier creux (11) est décalé tangentiellement par rapport au second creux (12), en particulier en miroir par rapport à un axe de symétrie qui traverse la dent correspondante et l'axe de rotation de satellite.

11. Train épicycloïdal (1) selon l'une des revendications 1 à 10, étant précisé que les tiges à ressort (10) sont retenues par un ajustement avec jeu dans une partie des premier et/ou second creux (11, 12) éloignée du plan de séparation.

12. Train épicycloïdal (1) selon l'une des revendications précédentes, étant précisé que les tiges à ressort (10) rectilignes, à l'état non chargé, présentent une section transversale ronde constante.
